# EUROPÄISCHE PATENTSCHRIFT

(11) **EP 2 349 781 B1**
(45) Veröffentlichungstag und Bekanntmachung des Hinweises auf die Patenterteilung: **05.09.2012**
(21) Anmeldenummer: 09753027.3
(22) Anmeldetag: 02.11.2009
(51) Int. Cl.: B60Q 3/02

(54) **ÜBERKOPF-LESELEUCHTE FÜR EINEN PASSAGIERSITZ**
OVERHEAD READING LIGHT FOR A PASSENGER SEAT
PLAFONNIER DE LECTURE POUR UN SIÈGE DE PASSAGER

(30) Priorität: 04.11.2008 DE 102008055812; 04.11.2008 US 111101
(43) Veröffentlichungstag der Anmeldung: 03.08.2011
(73) Patentinhaber: Airbus Operations GmbH, 21129 Hamburg (DE)
(72) Erfinder: KESSLER, Jens, 21614 Buxtehude (DE)
(74) Vertreter: Gunzelmann, Rainer
(86) Internationale Anmeldenummer: PCT/EP2009/007836
(87) Internationale Veröffentlichungsnummer: WO 2010/051957

(56) Entgegenhaltungen:
- WO-A1-2004/039631
- WO-A1-2006/018219
- DE-A1-102006 027 549
- DE-A1-102006 048 711
- US-A1- 2006 261 970

## Beschreibung

Die Erfindung betrifft eine Überkopf-Leseleuchte für einen Passagiersitz mit einer ersten und zweiten Mehrzahl von Lichtquellen, einer Haltevorrichtung zum Halten der ersten Mehrzahl von Lichtquellen und einer Ansteuerungseinrichtung zum Ansteuern der ersten Mehrzahl von Lichtquellen.

Aus dem Stand der Technik, siche z.B.WO 2006/018219, ist eine in einer Passagierserviceeinheit integrierte Überkopf-Leseleuchte für einen Passagiersitz in einer Flugzeugkabine bekannt. Die Passagierserviceeinheit weist neben der Überkopf-Leseleuchte eine Anzeigeeinheit für Gurtanschnallzeichen und Rauchverbot, eine Gebläseauslassöffnung und eine Ruftaste für Flugpersonal auf, wobei die Überkopf-Leseleuchte eine Lichtquelle aufweist, deren Ausrichtung mit einem Werkzeug verstellbar ist. Beim Einbau von Passagierserviceeinheiten in eine Flugzeugkabine werden diese an der Decke der Flugzeugkabine befestigt und anschließend werden in Abhängigkeit von den Bestuhlungsvorgaben der Fluglinien die Passagiersitze an vorgegebenen Positionen am Boden der Flugzeugkabine angebracht. Anschließend werden die Lichtquellen von Hand mit dem Werkzeug so ausgerichtet, dass sie vorbestimmte Bereiche jeweiliger Passagiersitze bestrahlen. Diese Ausrichtung der Lichtquellen ist jedoch zeitaufwendig, insbesondere bei Flugzeugen mit einer hohen Anzahl von Passagiersitzen.

In Flugzeugkabinen werden vermehrt Passagiersitze eingebaut, die sich in Sitzrichtung nach vorne und nach hinten bewegen bzw. verschieben lassen. Darüber hinaus gibt es insbesondere in der ersten Klasse Passagiersitze, die sich in Sitzrichtung nach links und nach rechts verschieben bzw. sich drehen lassen. Nachteilig bei der Verschiebung bzw. Drehung solcher Passagiersitze ist jedoch, dass sich die Ausrichtung der Überkopf-Leseleuchte nicht an eine geänderte Position des Passagiersitzes anpasst.

Zur Lösung dieses Problems sind Überkopf-Leseleuchten bekannt, deren Ausrichtung von Hand verstellbar ist. Eine solche Nachjustierung von Hand ist jedoch umständlich, insbesondere wenn aufgrund der Verschiebung bzw. Drehung des Passagiersitzes weg von der Überkopf-Leseleuchte diese nicht mehr im Sitzen von dem Passagier erreichbar ist, so dass sich der Passagier für die Nachjustierung der Überkopf-Leseleuchte von dem Passagiersitz erheben muss. In nicht sitzendem Zustand ist es für ihn aber schwierig, abzuschätzen, welche Ausrichtung der Überkopf-Leseleuchte in der Sitzposition, beispielsweise zum Lesen eines Buches, passend ist.

Die Erfindung ist auf die Aufgabe gerichtet, eine Überkopf-Leseleuchte für einen Passagiersitz, insbesondere in einer Flugzeugkabine, bereitzustellen, welche eine einfache und bequeme Anpassung der Ausrichtung der Überkopf-Leseleuchte an die Position des Passagiersitzes ermöglicht.

Zur Lösung dieser Aufgabe wird eine Überkopf-Leseleuchte für einen Passagiersitz, insbesondere in einer Flugzeugkabine, bereitgestellt, mit einer ersten Mehrzahl von Lichtquellen, von denen jede Licht entlang einer Mittelachse abstrahlt, einer Haltevorrichtung, welche die erste Mehrzahl von Lichtquellen in einer ersten Reihe angeordnet unbeweglich so festhält, dass die Mittelachsen der Lichtquellen der ersten Mehrzahl von Lichtquellen in einer ersten Ebene liegen und zueinander geneigt sind, und einer Ansteuerungseinrichtung, die mit der ersten Mehrzahl von Lichtquellen verbunden und dazu eingerichtet ist, wahlweise jeweils eine der Lichtquellen der ersten Mehrzahl von Lichtquellen anzusteuern.

Die erfindungsgemäße Überkopf-Leseleuchte zeichnet sich dadurch aus, dass ein Passagiersitz in unterschiedlichen Positionen, insbesondere bei einer Verschiebung des Passagiersitzes in Sitzrichtung nach vorne bzw. hinten oder nach links bzw. rechts, bestrahlt werden kann, ohne dass irgendeine mechanische Verstellung einer Lichtquelle notwendig ist, weil jede der Mehrzahl erster Lichtquellen aufgrund der zueinander geneigten Mittelachsen einen etwas anderen Bereich ausleuchtet. Angesteuert wird dabei nur jeweils eine, passende Lichtquelle. Erfindungsgemäß kann somit auf mechanische Verstellmittel zum Verstellen der Ausrichtung der Lichtquellen verzichtet werden, wodurch Gewicht und Raum eingespart werden kann, was insbesondere bei einer Verwendung der Überkopf-Leseleuchte in einer Flugzeugkabine von Vorteil ist. Vorzugsweise handelt es sich bei den Lichtquellen um Leuchtdioden. Jede der Lichtquellen kann dabei zusätzliche Elemente wie Reflektoren und/oder Linsen aufweisen. Bei der Haltevorrichtung kann sich um ein einstückiges Kunststoff-Spritzgussteil handeln. Die Ansteuerungseinrichtung steuert jeweils nur eine der Lichtquellen der ersten Mehrzahl von Lichtquellen zum Leuchten an. Aufgrund der unterschiedlichen Ausrichtung der Mittelachachsen in einer gemeinsamen Ebene, insbesondere da jede Mittelachse mit einem anderen Winkel in der ersten Ebene liegt, können durch Ansteuerung verschiedener Lichtquellen unterschiedliche Bereiche mit Licht bestrahlt werden.

Um eine kompakte Bauweise der Überkopf-Leseleuchte zu ermöglichen, können die Mittelachsen jeweils zweier benachbarter Lichtquellen der ersten Mehrzahl von Lichtquellen gleiche Abstände zueinander aufweisen und sich alle Mittelachsen der ersten Mehrzahl von Lichtquellen in einem Punkt schneiden. Vorzugsweise schneiden sich die Mittelachsen der Lichtquellen in einem Punkt in der gemeinsamen ersten Ebene zwischen der Überkopf-Leseleuchte und dem Passagiersitz und das entlang den Mittelachsen abgestrahlte Licht trifft nach dem Schnittpunkt auf den Passagiersitz. So können durch Wahl der Lage des Schnittpunkts, d.h. durch Wahl der Winkel, mit denen die Mittelachsen der Lichtquellen in der gemeinsamen Ebene liegen, die Abstände benachbarter Mittelachsen auf der Projektionsfläche des Passagiersitzes beeinflusst werden. Dadurch ist es möglich, die Mittelachsen an mögliche Verstellpositionen des Passagiersitzes anzupassen, so dass jeder der Verstellpositionen eine Lichtquelle zugeordnet werden kann.

Alternativ kann sich der Abstand zwischen den Mittelachsen jeweils zweier benachbarter Lichtquellen von einer in der Mitte der ersten Reihe angeordneten Lichtquelle nach außen verringern, wobei sich wiederum alle Mittelachsen der Lichtquellen der ersten Mehrzahl von Lichtquellen in einem Punkt schneiden. Dadurch ist es möglich, auch einem weit aus einer Ausgangsposition, beispielsweise beim Landen oder Starten eines Flugzeugs, in eine Richtung verschobenen Passagiersitz eine Beleuchtungsmöglichkeit bereitzustellen.

Um zusätzlichen Raum zwischen der Überkopf-Leseleuchte und einem darunter auf einem Passagiersitz sitzenden Passagier bereitzustellen und eine kompakte Bauweise der Überkopf-Leseleuchte zu ermöglichen, kann die erste Reihe, entlang, der die erste Mehrzahl von Lichtquellen angeordnet ist, die Gestalt eines ersten parabel bogens haben, dessen konkave Seite in Abstrahlrichtung der Lichtquellen weist. Insbesondere kann die konkave Seite dem Passagiersitz zugewandt sein. Durch diese Anordnung der Lichtquellen kann insbesondere mehr Freiraum über dem Kopf des Passagiers bereitgestellt werden, was das oft eingeengte Sitzen in einer Flugzeugkabine angenehmer gestaltet.

Um zusätzlich zu einer Verschiebung des Passagiersitzes in Längsrichtung nach vorne und nach hinten auch bei einer Verschiebung des Passagiersitzes in Querrichtung nach links und nach rechts bzw. bei einer Drehung des Passagiersitzes eine Anpassung der Ausrichtung der Überkopf-Leseleuchte an die Position des Passagiersitzes zu ermöglichen, weist diese eine zweite Mehrzahl von Lichtquellen auf, von denen jede Licht entlang einer Mittelachse abstrahlt, wobei die Haltevorrichtung die zweite Mehrzahl von Lichtquellen in einer zweiten Reihe angeordnet unbeweglich so festhält, dass die Mittelachsen der Lichtquellen der zweiten Mehrzahl von Lichtquellen in einer zweiten Ebene liegen und zueinander geneigt sind und wobei die zweite Reihe parallel zu der ersten Reihe ist. Insbesondere kann jede Mittelachse der Lichtquellen der zweiten Mehrzahl von Lichtquellen mit einem anderen Winkel in der zweiten Ebene liegen. So können beispielsweise bei einer Verschiebung des Passagiersitzes in Querrichtung nach links oder nach rechts wahlweise Lichtquellen der zweiten Mehrzahl von Lichtquellen angesteuert werden, um entsprechend einen nach links bzw. nach rechts verschobenen Passagiersitz zu bestrahlen.

Die Lichtquellen der ersten und zweiten Mehrzahl von Lichtquellen liegen auf einer elliptischen Paraboloidfläche und die erste und die zweite Ebene schneiden sich. Es ist auch denkbar, dass sich alle Mittelachsen der ersten und zweiten Mehrzahl von Lichtquellen in einem Punkt schneiden, wobei der Schnittpunkt zwischen den Lichtquellen und dem Passagiersitz liegt. Durch diese Anordnung der Lichtquellen wird zusätzlich zu einer Anpassbarkeit der Überkopf-Leseleuchte an eine Verschiebung des Passagiersitzes in Längsrichtung nach vorne bzw. hinten und in Querrichtung nach links bzw. rechts eine Überkopf-Leseleuchte mit einer kompakten Bauweise bereitgestellt, wobei ein vergrößerter Freiraum zwischen Überkopf-Leseleuchte und einem auf dem Passagiersitz sitzenden Passagier ermöglicht wird.

Damit die Lichtquellen in einer gleichmäßigen bzw. gleichmäßig verlaufenden Ausrichtung dem Passagiersitz zugewandt sind, kann die Haltevorrichtung die Lichtquellen der ersten und zweiten Mehrzahl von Lichtquellen so auf der elliptischen Paraboloidfläche halten, dass deren Mittelachsen zumindest im Wesentlichen normal zur elliptischen Paraboloidfläche verlaufen. Dadurch bilden die Lichtaustrittsflächen der Lichtquellen im Wesentlichen die Form eines elliptischen Paraboloiden. Sind an den Lichtquellen zusätzlich Reflektoren und/oder Linsen angebracht, so kann ferner vermieden werden, dass Kanten der Reflektoren zu dem Passagiersitz gewandt sind, an denen sich ein Passagier verletzen könnte.

Um eine bequeme Anpassung der Beleuchtung durch die Überkopf-Leseleuchte an die Position des Passagiersitzes zu ermöglichen, kann die Ansteuerungseinrichtung dazu eingerichtet sein, wahlweise eine der Lichtquellen in Abhängigkeit einer Position des Passagiersitzes anzusteuern. Beispielsweise kann eine Positionserfassungsvorrichtung vorgesehen sein, welche den Positionen des Passagiersitzes entsprechende Signale an die Ansteuerungseinrichtung übermittelt. Die Ansteuerungseinrichtung kann dabei automatisch in Abhängigkeit von der Position des Passagiersitzes eine passende Lichtquelle ansteuern. Dadurch wird ermöglicht, dass der Passagiersitz in jeder Position automatisch von der richtigen Lichtquelle beleuchtet wird.

Um eine hohe Anzahl von Beleuchtungsmöglichkeiten der Überkopf-Leseleuchte für eine Verschiebung des Passagiersitzes nach vorne, nach hinten, nach links und nach rechts, insbesondere bei einer Verschiebung des Passagiersitzes aus einer Ausgangsposition weit nach links bzw. weit nach rechts, bereitzustellen, kann die Haltevorrichtung jeweils eine Mehrzahl von Lichtquellen auf mehr als zwei parallelen Ellipsenbögen der elliptischen Paraboloidfläche halten, wobei sich die Abstände zwischen zwei jeweils benachbarten Ellipsenbögen von einem durch den Scheitelpunkt der elliptischen Paraboloidfläche laufenden Ellipsenbogen nach außen verringern.

Um einem auf dem Passagiersitz sitzenden Passagier eine angenehme Lichtatmosphäre bereitzustellen, kann die Überkopf-Leseleuchte eine dritte Mehrzahl von Lichtquellen aufweisen, von denen jede Licht entlang einer Mittelachse abstrahlt. Dabei hält die Haltevorrichtung die dritte Mehrzahl von Lichtquellen in einer dritten Reihe angeordnet unbeweglich so fest, dass die Mittelachsen der Lichtquellen der dritten Mehrzahl von Lichtquellen in einer dritten Ebene liegen und zueinander geneigt sind, wobei Lichtquellen der ersten Mehrzahl von Lichtquellen mit einer höheren Lichtstärke als die Lichtquellen der dritten Mehrzahl von Lichtquellen strahlen und die Ansteuerungseinrichtung dazu eingerichtet ist, mindestens eine der Lichtquellen der dritten Mehrzahl von Lichtquellen unabhängig von der wahlweisen Ansteuerung einer Lichtquelle der ersten Mehrzahl von Lichtquellen anzusteuern. So können die Lichtquellen der dritten Mehrzahl von Lichtquellen auch Licht mit einer anderen Farbe als die Lichtquellen der ersten bzw. zweiten Mehrzahl von Lichtquellen abstrahlen. Dadurch wird ein sogenanntes "Ambient-Light" bereitgestellt. Es ist auch denkbar, dass die Lichtquellen der dritten Mehrzahl von Lichtquellen Licht mit den Farben rot, grün und blau abstrahlen, so dass durch additive Rot-, Grün-, Blau- (RGB) Farbmischung jede beliebige Umgebungslichtfarbe erzeugt werden kann. Insbesondere können die Lichtquellen der dritten Mehrzahl von Lichtquellen so ausgerichtet sein, dass sie einen Bereich auf dem Passagiersitz bestrahlen, der neben bzw. teilweise überlappend mit einem Bereich ist, der von einer als Leselicht verwendeten Lichtquelle, insbesondere einer Lichtquelle der ersten oder zweiten Mehrzahl von Lichtquellen, bestrahlt wird.

Um in den Innenraum der Flugzeugkabine hervorstehende Lichtquellen zu vermeiden, kann die Überkopf-Leseleuchte eine Abdeckung auf der Abstrahlseite der Leuchte aufweisen, deren Außenfläche zumindest teilweise die Form der ersten Reihe nachbildet, wobei die Abdeckung eine Mehrzahl von Aussparungen aufweist, in denen die Lichtquellen der ersten Mehrzahl von Lichtquellen von der Haltevorrichtung gehalten sind, und die Lichtquellen der ersten Mehrzahl von Lichtquellen Lichtaustrittsflächen aufweisen, die zumindest im Wesentlichen bündig mit der Außenfläche der Abdeckung sind. Dadurch kann eine Überkopf-Leseleuchte mit einer glatten Außenfläche bereitgestellt werden, welche neben einem geringen Verletzungsrisiko für Passagiere einfach gereinigt werden kann.

Die Überkopf-Leseleuchte kann auch eine zumindest teilweise transparente Abdeckung auf der Abstrahlseite der Leuchte aufweisen, deren Außenfläche zumindest teilweise die Form der ersten Reihe nachbildet, wobei die Lichtquellen der ersten Mehrzahl von Lichtquellen durch die Abdeckung strahlen. Für den Passagier sind in dieser Ausführungsform nur die Außenfläche die Abdeckung und die jeweils angesteuerte Lichtquelle sichtbar. Durch die transparente Abdeckung sind die Lichtquellen vor einer Berührung durch Passagiere geschützt, was zu einer höheren Lebensdauer der Lichtquellen führt. Die Passagiere können sich auch nicht an den Lichtquellen verletzen. Darüber hinaus wird durch die Ausbildung der Abdeckung ohne Öffnungen deren Reinigung vereinfacht.

Die Erfindung betrifft ferner eine Passagierserviceeinheit, insbesondere für eine Flugzeugkabine, mit wenigstens einer erfindungsgemäßen Überkopf-Leseleuchte.

Bevorzugte Ausführungsbeispiele der vorliegenden Erfindung werden nun anhand der beigefügten schematischen Figuren näher erläutert, von denen:
- Figur 1: eine seitliche Schnittansicht einer Überkopf-Leseleuchte mit einer Mehrzahl von Leuchtdioden zeigt;
- Figur 2: eine seitliche Schnittansicht der Überkopf-Leseleuchte der Figur 1 mit einer elektrischen Ansteuerung zeigt;
- Figur 3: eine seitliche Schnittansicht einer Überkopf-Leseleuchte mit einer Mehrzahl von Leuchtdioden zeigt;
- Figur 4: eine Ansicht von unten der Überkopf-Leseleuchte der Figur 3 zeigt;
- Figur 5: die Überkopf-Leseleuchte der Figur 4 bei einer Verschiebung eines Passagiersitzes in Sitzrichtung nach vorne zeigt;
- Figur 6: die Überkopf-Leseleuchte der Figur 4 bei einer Verschiebung eines Passagiersitzes in Sitzrichtung nach hinten zeigt, und
- Figur 7: die Überkopf-Leseleuchte der Figur 4 mit einem Umgebungslicht zeigt.

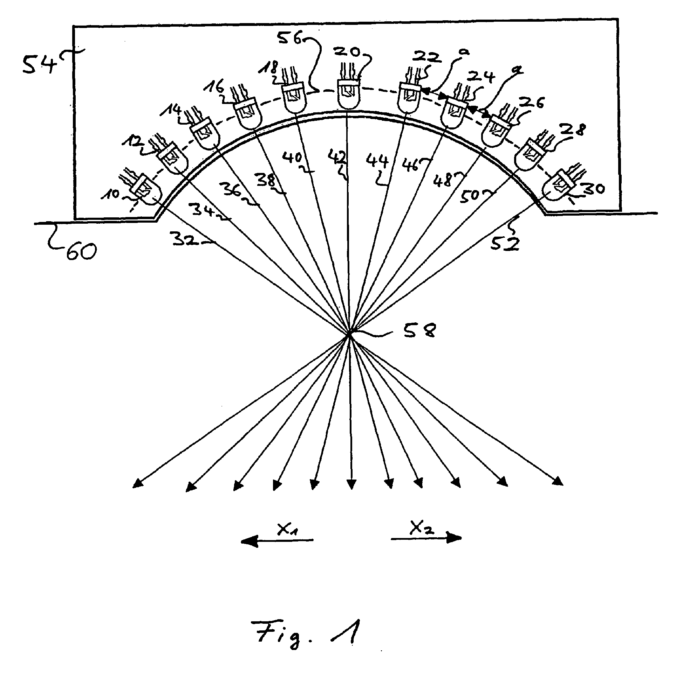

Eine in der Figur 1 in einer seitlichen Schnittansicht ausschnittsweise gezeigte Überkopf-Leseleuchte weist eine Mehrzahl von Leuchtdioden 10, 12, 14, 16, 18, 20, 22, 24, 26, 28, 30 auf, die Licht entlang von Mittelachsen 32, 34, 36, 38, 40, 42, 44, 46, 48, 50 und 52 in einen Innenraum einer Flugzeugkabine zu einem Passagiersitz (nicht gezeigt) abstrahlen. Eine schematisch dargestellte Haltevorrichtung hält die Leuchtdioden 10, 12, 14, 16, 18, 20, 22, 24, 26, 28, 30 so unbeweglich fest, dass die Mittelachsen 32, 34, 36, 38, 40, 42, 44, 46, 48, 50, 52 in einer gemeinsamen Ebene liegen. In der Figur 1 ist die gemeinsame Ebene die Zeichenebene. Insbesondere hält die Haltevorrichtung 54 die Leuchtdioden 10, 12, 14, 16, 18, 20, 22, 24, 26, 28, 30 derart, dass die Mittelachsen 32, 34, 36, 38, 40, 42, 44, 46, 48, 50, 52 mit unterschiedlichen Winkeln, d.h. mit verschiedenen Ausrichtungen, in der gemeinsamen Ebene liegen. Dabei sind die Mittelachsen zueinander geneigt und keine der Mittelachsen 32, 34, 36, 38, 40, 42, 44, 46, 48, 50, 52 ist parallel zu einer anderen Mittelachse ausgerichtet.

Die Haltevorrichtung 54 hält die Leuchtdioden 10, 12, 14, 16, 18, 20, 22, 24, 26, 28, 30 in einer Reihe, welche die Form eines Kreisbogens 56 aufweist. Insbesondere hält die Haltevorrichtung 54 die Leuchtdioden 10, 12, 14, 16, 18, 20, 22, 24, 26, 28, 30 derart auf dem Kreisbogen 56, dass die Mittelachsen jeweils zweier benachbarter Leuchtdioden der Mehrzahl von Leuchtdioden 10, 12, 14, 16, 18, 20, 22, 24, 26, 28, 30 gleiche Abstände a zueinander aufweisen. Grundsätzliche kann die Reihe, entlang der die Leuchtdioden 10, 12, 14, 16, 18, 20, 22, 24, 26, 28, 30 angeordnet sind, jede Form aufweisen, insbesondere die Form einer Geraden.

Die Leuchtdioden 10, 12, 14, 16, 18, 20, 22, 24, 26, 28, 30 sind so auf dem Kreisbogen 56 ausgerichtet, dass deren Mittelachsen 32, 34, 36, 38, 40, 42, 44, 46, 48, 50, 52 im Wesentlichen normal zu der konvexen Seite des Kreisbogens 56 sind. Die Mittelachsen 32, 34, 36, 38, 40, 42, 44, 46, 48, 50, 52 schneiden sich in einem Schnittpunkt 58, der zwischen der Überkopf-Leseleuchte und dem Passagiersitz liegt.

Zwischen den Leuchtdioden 10, 12, 14, 16, 18, 20, 22, 24, 26, 28, 30 und dem Schnittpunkt 58 ist eine teilweise transparente Abdeckung 60 angeordnet. Die Abdeckung 60 ist im Bereich der Leuchtdioden 10, 12, 14, 16, 18, 20, 22, 24, 26, 28, 30 der Form des Kreisbogens 56 nachgebildet. Im Bereich der Leuchtdioden 10, 12, 14, 16, 18, 20, 22, 24, 26, 28, 30 ist die Abdeckung 60 transparent ausgebildet. Die Leuchtdioden 10, 12, 14, 16, 18, 20, 22, 24, 26, 28, 30 strahlen durch die transparente Abdeckung 60 in den Innenraum der Flugzeugkabine. Durch die Abdeckung 60 sind die Mehrzahl von Leuchtdioden 10, 12, 14; 16, 18, 20, 22, 24, 26, 28, 30 getrennt von den Passagieren angeordnet, so dass diese die Leuchtdioden 10, 12, 14, 16, 18, 20, 22, 24, 26, 28, 30 nicht versehentlich berühren bzw. beschädigen können. Darüber hinaus weist die transparente Abdeckung 60 keine Öffnungen auf, so dass weder Staub noch andere Verschmutzungen zu den Leuchtdioden 10, 12, 14, 16, 18, 20, 22, 24, 26, 28, 30 gelangen können. Zusätzlich wird durch die geschlossene Abdeckung 60 deren Reinigung vereinfacht.

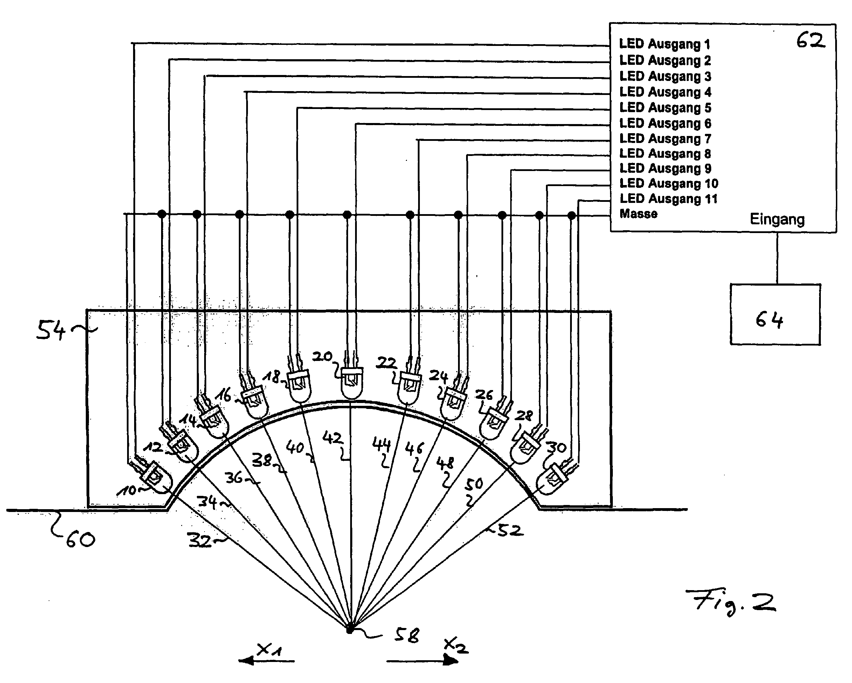

In der Figur 2 wird die elektrische Ansteuerung der Leuchtdioden 10, 12, 14, 16, 18, 20, 22, 24, 26, 28, 30 der Überkopf-Leseleuchte der Figur 1 gezeigt. Für die elektrische Ansteuerung ist eine Ansteuerungseinrichtung 62 vorgesehen. Die Ansteuerungseinrichtung 62 weist Anschlüsse für einen Eingang, eine Mehrzahl von LED-Ausgängen 1 bis 11 und einen Masseanschluss auf. Der Eingang der Ansteuerungseinrichtung 62 ist mit einer Stromquelle 64 verbunden, welche die Leuchtdioden 10, 12, 14, 16, 18, 20, 22, 24, 26, 28, 30 mit Strom versorgt. Jede der Leuchtdioden 10, 12, 14, 16, 18, 20, 22, 24, 26, 28, 30 weist zwei Anschlussbeinchen auf. Eines der Anschlussbeinchen ist jeweils mit dem Masseanschluss der Ansteuerungseinrichtung 62 verbunden und die zweiten Anschlussbeinchen der Leuchtdioden 10, 12, 14, 16, 18, 20, 22, 24, 26, 28, 30 sind jeweils mit einem der LED-Ausgänge 1 bis 11 verbunden. Die Ansteuerungseinrichtung 62 ist dazu eingerichtet, wahlweise eine der Leuchtdioden 10, 12, 14, 16, 18, 20, 22, 24, 26, 28, 30 anzusteuern.

Die Überkopf-Leseleuchte ist zentral über einem Passagiersitz (nicht gezeigt) angebracht. In einer Ausgangsposition des Passagiersitzes, beispielsweise beim Starten und Landen des Flugzeugs, steuert die Ansteuerungseinrichtung 62 nur die Leuchtdiode 20 an, welche Licht entlang der Mittelachse 42 auf den Passagiersitz abstrahlt. Wird nun der Passagiersitz in die Richtung x₁ verschoben, so steuert die Ansteuerungseinrichtung 62 anstelle der Leuchtdiode 20 die Leuchtdiode 22 an, welche Licht entlang der Mittelachse 44 auf den selben Bereich des nunmehr verschobenen Passagiersitzes abstrahlt. Wird der Passagiersitz weiter in die Richtung x₁ verschoben, so können abhängig von dem Verschiebungsweg in die Richtung x₁ wahlweise die Leuchtdioden 24, 26, 28 oder 30 von der Ansteuerungseinrichtung 62 angesteuert werden. Bei einer maximalen Verschiebung des Passagiersitzes in die Richtung x₁ wird die Leuchtdiode 30 von der Ansteuerungseinrichtung 62 angesteuert, welche Licht entlang der Mittelachse 52 auf den Passagiersitz abstrahlt. Entsprechend werden, falls der Passagiersitz in die Richtung x₂, bewegt wird, wahlweise die Leuchtdioden 18, 16, 14, 12 oder 10 von der Ansteuerungseinrichtung 52 angesteuert.

Durch die Anordnung der Leuchtdioden 10, 12, 14, 16, 18, 20, 22, 24, 26, 28, 30 auf dem Kreisbogen 56 ist eine kompakte Bauweise der Überkopf-Leseleuchte möglich, wobei zusätzlicher Raum über einem auf dem Passagiersitz sitzenden Passagier bereitgestellt wird.

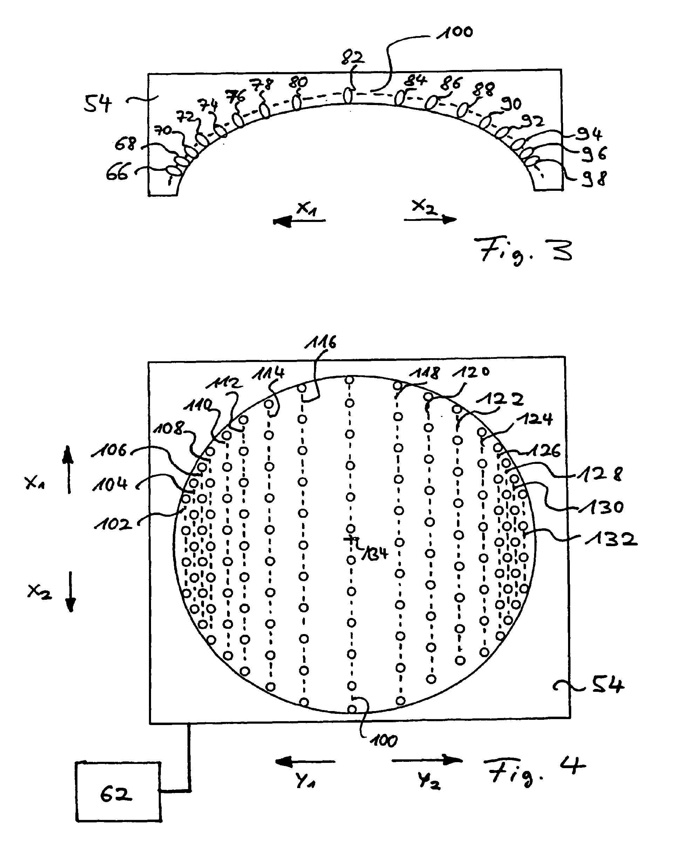

Die Figur 3 zeigt eine seitliche Schnittansicht einer Überkopf-Leseleuchte mit einer Haltevorrichtung 54, welche eine Mehrzahl von Leuchtdioden 66, 68, 70, 72, 74, 76, 78, 80, 82, 84, 86, 88, 90, 92, 94, 96, 98 unbeweglich festhält.

Die Leuchtdioden 66, 68, 70, 72, 74, 76, 78, 80, 82, 84, 86, 88, 90, 92, 94, 96, 98 sind entlang eines Ellipsenbogens 100 angeordnet und die Abstände zwischen zwei jeweils benachbarten Leuchtdioden verringern sich in der Mitte des Ellipsenbogens 100 angeordneten Leuchtdiode 82 nach außen. Die Leuchtdioden 66, 68, 70, 72, 74, 76, 78, 80, 82, 84, 86, 88, 90, 92, 94, 96, 98 strahlen Licht entlang jeweiliger Mittelachsen (welche in der Figur 3 nicht eingezeichnet sind) auf einen unter den Leuchtdioden 66, 68, 70, 72, 74, 76, 78, 80, 82, 84, 86, 88, 90, 92, 94, 96, 98 angeordneten Passagiersitz (nicht gezeigt).

Die Figur 4 zeigt eine Ansicht der Überkopf-Leseleuchte der Figur 3 von unten. Wie aus der Figur 4 ersichtlich ist, weist die Überkopf-Leseleuchte zusätzlich zu den entlang dem Ellipsenbogen 100 angeordneten Leuchtdioden 66, 68, 70, 72, 74, 76, 78, 80, 82, 84, 86, 88, 90, 92, 94, 96, 98 entlang weiterer Ellipsenbögen 102, 104, 106, 108, 110, 112, 114, 116, 118, 120, 122, 124, 126, 128, 130, 132 angeordnete Leuchtdioden auf. Die Ellipsenbögen 100, 102, 104, 106, 108, 110, 112, 114, 116, 118, 120, 122, 124, 126, 128, 130, 132 sind parallel zueinander ausgerichtet. Gemäβ der vorliegenden Erfindung liegen die Ellipsenbögen 100, 102, 104, 106, 108, 110, 112, 114, 116, 118, 120, 122, 124, 126, 128, 130, 132 bzw. alle Leuchtdioden auf einer elliptischen Paraboloidfläche (in Figur 4 ist nur die konkave elliptische Paraboloidfläche sichtbar). Die Abstände zwischen zwei jeweils benachbarter Ellipsenbögen 100, 102, 104, 106, 108, 110, 112, 114, 116, 118, 120, 122, 124, 126, 128, 130, 132 verringern sich von dem durch den Scheitelpunkt 134 der elliptischen Paraboloidfläche laufenden Ellipsenbogen 100 nach außen.

Die auf den Ellipsenbögen 100, 102, 104, 106, 108, 110, 112, 114, 116, 118, 120, 122, 124, 126, 128, 130, 132 angeordneten Leuchtdioden sind so ausgerichtet, dass ihre Mittelachsen jeweils in einer Ebene liegen. Die Ebenen schneiden sich in einer Geraden (nicht gezeigt). Insbesondere sind die Ebenen so ausgerichtet, dass sich alle Mittelachsen der Leuchtdioden in einem Schnittpunkt über dem Passagiersitz (nicht gezeigt) schneiden.

Alle Leuchtdioden sind mit der Ansteuerungseinrichtung 62 verbunden, welche dazu eingerichtet ist, die Leuchtdioden wahlweise anzusteuern. So ist mit der in den Figuren 3 und 4 gezeigten Überkopf-Leseleuchte eine Anpassung des von der Überkopf-Leseleuchte abgestrahlten Lichts an die Position des Passagiersitzes bei einer Verschiebung dieses in die Richtungen x₁ und x₂, d.h. in Längsrichtung nach vorne und nach hinten, und in die Richtungen y₁ und y₂, d.h. in Querrichtung nach links und nach rechts, möglich.

Wird der Passagiersitz aus einer Anfangposition (beispielsweise beim Starten und Landen des Flugzeugs), in welcher er von der Leuchtdiode 82 bestrahlt wird, in die Richtung x₁ verschoben, so wird anstelle der Leuchtdiode 82 die Leuchtdiode 80 von der Ansteuerungseinrichtung 62 angesteuert. Entsprechend wird bei einer Verschiebung des Passagiersitzes in die Richtung x₂ die Leuchtdiode 84 anstelle der Leuchtdiode 82 von der Ansteuerungseinrichtung 62 angesteuert. Bei einer weiteren Verschiebung des Passagiersitzes in die Richtungen x₁ bzw. x₂ werden weiter außen angeordnete Leuchtdioden von der Ansteuerungseinrichtung 62 angesteuert.

Wird der Passagiersitz in die Richtung y₁ verschoben, so steuert die Ansteuerungseinrichtung 162 entsprechend eine der auf den Ellipsenbögen 118, 120, 122, 124, 126, 128, 130 oder 132 angeordneten Leuchtdioden an. Wird dagegen der Passagiersitz in die Richtung y₂ verschoben, so steuert die Ansteuerungseinrichtung 162 eine der auf den Ellipsenbögen 102, 104, 106, 108, 110, 112, 114 oder 116 angeordneten Leuchtdioden an.

Der Passagiersitz weist eine Erfassungsvorrichtung (nicht gezeigt) auf, welche ein der Position des Passagiersitzes entsprechendes Signal an die Ansteuerungseinrichtung 62 übermittelt. In Abhängigkeit von der Position des Passagiersitzes steuert die Ansteuerungseinrichtung 62 automatisch die zugehörige Leuchtdiode an, so dass der Passagiersitz in jeder in die Richtungen x₁, x₂, y₁ und y₂ verschobenen Position von der Überkopf-Leseleuchte mit Licht bestrahlt wird.

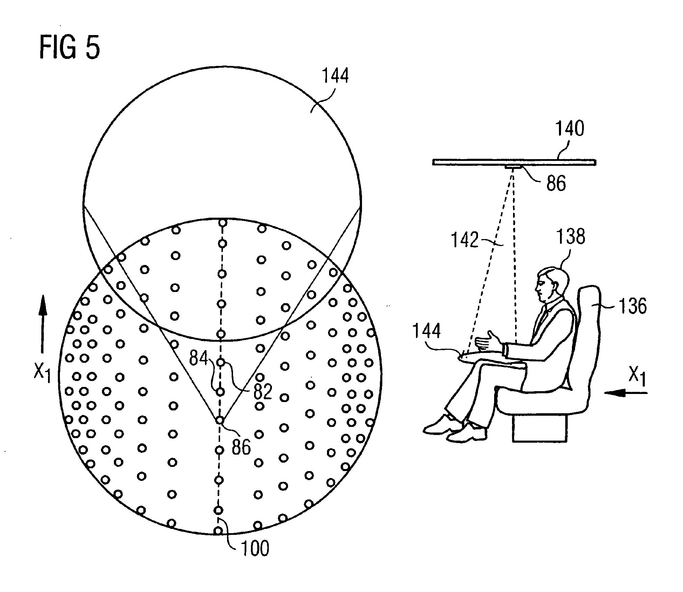

Die Figur 5 zeigt die Leseleuchte der Figur 4 und veranschaulicht eine Änderung der Ansteuerung der Leuchtdioden bei einer Verschiebung eines Passagiersitzes 136.

Auf dem Passagiersitz 136 befindet sich ein Passagier 138. Der Passagiersitz 136 wird aus einer Ausgangsposition (nicht gezeigt) in die Richtung x₁, d.h. in Sitzrichtung nach vorne, verschoben. In der Ausgangsposition wurde der Passagiersitz 136 von der Leuchtdiode 82 beleuchtet. Nach der Verschiebung des Passagiersitzes 136 in die Richtung x₁ wird anstelle der Leuchtdiode 82 die Leuchtdiode 86 von der Ansteuerungseinrichtung 62 angesteuert.

Die Überkopf-Leseleuchte ist dabei in einer Passagierserviceeinheit 140 eingebaut, die oberhalb des Passagiersitzes 136 an der Decke der Flugzeugkabine befestigt ist. Die Leuchtdiode 86 strahlt Licht in der Form eines Lichtkegels 142, welches im Wesentlichen in der Form einer Kreisfläche 144 auf den Passagier 138, insbesondere auf ein von ihm gelesenes Buch (nicht gezeigt), trifft.

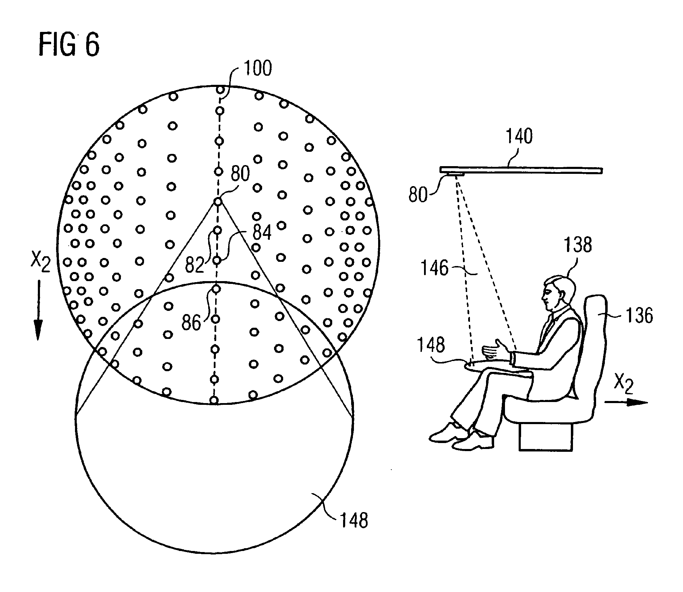

Die Figur 6 zeigt eine Verschiebung des Passagiersitzes 136 aus der in der Figur 5 gezeigten Position, bei der die Leuchtdiode 86 den Passagiersitz 136 bzw. den Passagier 138 bestrahlt, in die Richtung x₂, d.h. in Sitzrichtung nach hinten. Bei einer entsprechenden Verschiebung des Passagiersitzes 136 in die Richtung x₁ wird anstelle der Leuchtdiode 86 die Leuchtdiode 80 angesteuert, welche Licht in Form eines Lichtkegels 146 abstrahlt, das im Wesentlichen in der Form einer Kreisfläche 138 auf den Passagier 138 trifft.

Dadurch wird gewährleistet, dass der Passagier 138 immer in Abhängigkeit von der Position des Passagiersitzes 136 mit ausreichend Licht, beispielsweise zum Lesen eines Buches, bestrahlt wird. Folglich kann vermieden werden, dass der Passagier 138 bei einer Änderung der Sitzposition aufstehen und die Leuchte von Hand neu ausrichten muss.

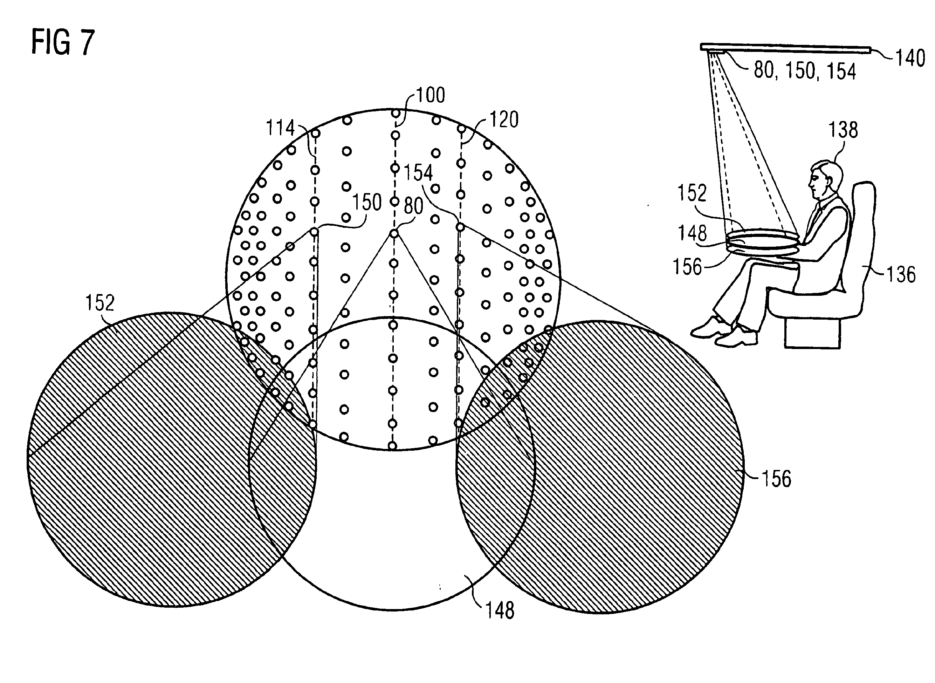

Die Figur 7 zeigt eine Ansicht von unten der Überkopf-Leseleuchte der Figur 4 mit einem Umgebungslicht.

Die Überkopf-Leseleuchte der Figur 7 entspricht der Überkopf-Leseleuchte der Figur 4, wobei die entlang den Ellipsenbögen 114 und 120 angeordneten Leuchtdioden mit einer geringeren Lichtstärke als die entlang dem Ellipsenbogen 100 angeordneten Leuchtdioden strahlen. Die veränderten Lichtstärken können beispielsweise mit Hilfe eines Dimmers realisiert werden. Die entlang den Ellipsenbögen 114 und 120 angeordneten Leuchtdioden strahlen ferner mit einer anderen Farbe, beispielsweise rot oder blau, als die entlang dem Ellipsenbogen 100 angeordneten Leuchtdioden. Dadurch kann die Überkopf-Leseleuchte zusätzlich zu einer Leseleuchtenfunktion ein angenehmes Umgebungslicht, ein sogenanntes Ambient-Light, bereitstellen.

Es ist auch denkbar, dass die entlang den Ellipsenbögen 114 und/oder 120 angeordneten Leuchtdioden Licht mit den Farben rot, grün und blau abstrahlen, so dass durch additive RGB-Farbmischung jede beliebige Farbe als Umgebungslicht für den Passagiersitz, insbesondere als Akzentlicht zusätzlich zu dem Leselicht, erzeugt werden kann. Die entsprechende Ansteuerung der entlang den Ellipsenbögen 114 und/oder 120 angeordneten Leuchtdioden zum Erzeugen der gewünschten Lichtfarbe des Umgebungslichts kann mit Hilfe der Ansteuerungseinrichtung 162 erfolgen.

Wie aus der Figur 7 ersichtlich ist, trifft das von der Leuchtdiode 150 abgestrahlte Umgebungslicht im Wesentlichen in der Form einer Kreisfläche 152 auf den Passagier 138 und das von der Leuchtdiode 154 abgestrahlte Umgebungslicht trifft im Wesentlichen in der Form einer Kreisfläche 156 auf den Passagier 138. Auf dem Passagier 138 überlappen sich die Kreisflächen 152 und 148 bzw. 148 und 156, wobei die Leuchtdioden 150 und 154 Bereiche seitlich neben der Kreisfläche 148 des Leselichts bestrahlen.

Zusätzlich zu der in der Figur 7 gezeigten Ansteuerung der Leuchtdioden 150 und 154 können noch weitere Leuchtdioden, welche entlang den Ellipsenbögen 114 bzw. 120 angeordnet sind, von der Ansteuerungseinrichtung 162 angesteuert werden. Dabei kann die Ansteuerungseinrichtung 162 eine oder mehrere der entlang den Ellipsenbögen 114 und 120 angeordneten Leuchtdioden ansteuern. Es ist auch denkbar, dass die Ansteuerungseinrichtung 162 nur das Umgebungslicht und nicht das Leselicht ansteuert, so dass von der Überkopf-Leseleuchte nur Umgebungslicht erzeugt wird.

Die vorliegende Erfindung wurde anhand von Ausführungsbeispielen in einer Flugzeugkabine erläutert. Die vorliegende Erfindung ist jedoch nicht auf eine Anwendung in einer Flugzeugkabine beschränkt. So kann die erfindungsgemäße Überkopf-Leseleuchte beispielsweise auch in einem Zug, einem Bus oder einem Automobil verwendet werden.

Die vorliegende Erfindung ist auch nicht auf eine automatische Anpassung der Ansteuerung der Lichtquellen an eine Position eines Passagiersitzes beschränkt. Die Ansteuerung der Lichtquellen kann auch manuell, beispielsweise mit Hilfe einer an dem Passagiersitz angebrachten Bedieneinheit, durch den Passagier erfolgen.

## Patentansprüche

1. Überkopf-Leseleuchte für einen Passagiersitz (136), insbesondere in einer Flugzeugkabine, mit
- einer ersten Mehrzahl von Lichtquellen (10 - 30; 66 - 98), von denen jede Licht entlang einer Mittelachse (32 - 52) abstrahlt,
- einer Haltevorrichtung (54), welche die erste Mehrzahl von Lichtquellen (10 - 30; 66 - 98) in einer ersten Reihe (56; 100) angeordnet unbeweglich so festhält, dass die Mittelachsen der Lichtquellen (32 - 52) der ersten Mehrzahl von Lichtquellen in einer ersten Ebene liegen und zueinander geneigt sind, und
- einer Ansteuerungseinrichtung (62), die mit der ersten Mehrzahl von Lichtquellen (10 - 30; 66 - 98) verbunden und dazu eingerichtet ist, wahlweise jeweils eine der Lichtquellen der ersten Mehrzahl von Lichtquellen (10 - 30; 66 - 98) anzusteuern,
**gekennzeichnet durch**
- einer zweiten Mehrzahl von Lichtquellen, von denen jede Licht entlang einer Mittelachse abstrahlt, wobei
die Haltevorrichtung (54) die zweite Mehrzahl von Lichtquellen in einer zweiten Reihe (102 - 132) angeordnet unbeweglich so festhält, dass die Mittelachsen der Lichtquellen der zweiten Mehrzahl von Lichtquellen in einer zweiten Ebene liegen und zueinander geneigt sind, die zweite Reihe (102 - 132) parallel zu der ersten Reihe (100) ist, die Lichtquellen der ersten und der zweiten Mehrzahl von Lichtquellen auf einer elliptischen Paraboloidfläche liegen und sich die erste und die zweite Ebene schneiden.

2. Überkopf-Leseleuchte nach Anspruch 1, bei der die Mittelachsen jeweils zweier benachbarter Lichtquellen der ersten Mehrzahl von Lichtquellen (10 - 30) an den Lichtquellen (10 - 30) gleiche Abstände (a) zueinander aufweisen und bei der sich alle Mittelachsen der ersten Mehrzahl von Lichtquellen (32 - 52) in einem Punkt (58) schneiden.

3. Überkopf-Leseleuchte nach Anspruch 1, bei der sich an den Lichtquellen der Abstand zwischen den Mittelachsen jeweils zweier benachbarter Lichtquellen der ersten Mehrzahl von Lichtquellen (66 - 98) von einer in der Mitte der ersten Reihe (100) angeordneten Lichtquelle (82) nach außen verringert und bei der sich alle Mittelachsen der ersten Mehrzahl von Lichtquellen in einem Punkt schneiden.

4. Überkopf-Leseleuchte nach einem der vorhergehenden Ansprüche, bei der die erste Reihe die Gestalt eines ersten parabel bogens (100) hat, dessen konkave Seite in Abstrahlrichtung der Lichtquelle weist.

5. Überkopf-Leseleuchte nach Anspruch 1, bei der die Haltevorrichtung (54) die Lichtquellen der ersten und der zweiten Mehrzahl von Lichtquellen so auf der elliptischen Paraboloidfläche hält, dass deren Mittelachsen im Wesentlichen normal zur elliptischen Paraboloidfläche verlaufen.

6. Überkopf-Leseleuchte nach Anspruch 1 oder 5, bei der die Haltevorrichtung (54) jeweils eine Mehrzahl von Lichtquellen auf mehr als zwei parallelen Parabeln (100 -132) der elliptischen Paraboloidfläche hält, wobei sich die Abstände zwischen zwei jeweils benachbarten Parabeln von einer durch den Scheitelpunkt der elliptischen Paraboloidfläche laufenden Parabel (100) nach außen verringern.

7. Überkopf-Leseleuchte nach einem der vorhergehenden Ansprüche, bei der die Ansteuerungseinrichtung (62) dazu eingerichtet ist, wahlweise eine der Lichtquellen (10 - 30; 66 - 98) in Abhängigkeit einer Position des Passagiersitzes (136) anzusteuern.

8. Überkopf-Leseleuchte nach einem der vorhergehenden Ansprüche, mit
- einer dritten Mehrzahl von Lichtquellen (150, 154), von denen jede Licht entlang einer Mittelachse abstrahlt, wobei
die Haltevorrichtung (54) die dritte Mehrzahl von Lichtquellen (150, 154) in einer dritten Reihe (114, 120) angeordnet unbeweglich so festhält, dass die Mittelachsen der Lichtquellen der dritten Mehrzahl von Lichtquellen in einer dritten Ebene liegen und zueinander geneigt sind, wobei die Lichtquellen der ersten Mehrzahl von Lichtquellen (66 - 98) mit einer höheren Lichtstärke als die Lichtquellen der dritten Mehrzahl von Lichtquellen (150, 154) strahlen und die Ansteuerungseinrichtung (62) dazu eingerichtet ist, mindestens eine der Lichtquellen der dritten Mehrzahl von Lichtquellen (150, 154) unabhängig von der wahlweisen Ansteuerung einer Lichtquelle der ersten Mehrzahl von Lichtquellen (66 - 98) anzusteuern.

9. Überkopf-Leseleuchte nach einem der vorhergehenden Ansprüche, mit
- einer Abdeckung auf der Abstrahlseite der Leuchte, deren Außenfläche zumindest teilweise die Form der ersten Reihe (56; 100) nachbildet, wobei die Abdeckung eine Mehrzahl von Aussparungen aufweist, in denen die Lichtquellen der ersten Mehrzahl von Lichtquellen (10 - 30; 66 - 98) von der Haltevorrichtung (54) gehalten sind, und die Lichtquellen der ersten Mehrzahl von Lichtquellen (10 - 30; 66 - 98) Lichtaustrittsflächen aufweisen, die zumindest im Wesentlichen bündig mit der Au-βenfläche der Abdeckung sind.

10. Überkopf-Leseleuchte nach einem der Ansprüche 1 bis 8, mit
- einer zumindest teilweise transparenten Abdeckung (60) auf der Abstrahlseite der Leuchte, deren Außenfläche zumindest teilweise die Form der ersten Reihe (56; 100) nachbildet, wobei die Lichtquellen der erste Mehrzahl von Lichtquellen (10 - 30; 66 - 98) durch die Abdeckung (60) strahlen.

11. Passagierserviceeinheit (140), insbesondere für eine Flugzeugkabine, mit wenigstens einer Überkopf-Leseleuchte nach einem der vorhergehenden Ansprüche.

## Claims

1. Overhead reading lamp for a passenger seat (136), in particular in an aircraft cabin, comprising
- a first plurality of light sources (10 - 30; 66 - 98), each of which emits light along a centre line (32 - 52),
- a holding device (54), which immovably secures the first plurality of light sources (10 - 30; 66 - 98) disposed in a first row (56; 100) in such a way that the centre lines of the light sources (32 - 52) of the first plurality of light sources lie in a first plane and are inclined relative to one another, and
- an activation device (62), which is connected to the first plurality of light sources (10 - 30; 66 - 98) and adapted to selectively activate in each case one of the light sources of the first plurality of light sources (10 - 30; 66 - 98)
**characterized by**
- a second plurality of light sources, each of which emits light along a centre line, wherein
the holding device (54) immovably secures the second plurality of light sources disposed in a second row (102 - 132) in such a way that the centre lines of the light sources of the second plurality of light sources lie in a second plane and are inclined relative to one another, the second row (102 - 132) is parallel to the first row (100) and the light sources of the first and the second plurality of light sources lie on an elliptical paraboloidal surface and the first and the second plane intersect.

2. Overhead reading lamp according to claim 1, wherein the centre lines of in each case two adjacent light sources of the first plurality of light sources (10 - 30) at the light sources (10 - 30) are at equal distances (a) from one another and wherein all of the centre lines of the first plurality of light sources (32 - 52) intersect at one point (58).

3. Overhead reading lamp according to claim 1, wherein the distance between the centre lines of in each case two adjacent light sources of the first plurality of light sources (66 - 98) decreases outward from a light source (82) disposed in the middle of the first row (100) and wherein all of the centre lines of the first plurality of light sources intersect at one point.

4. Overhead reading lamp according to one of the preceding claims, wherein the first row has the shape of a first parable arc (100), the concave side of which faces in the direction of emission of the light source.

5. Overhead reading lamp according to claim 1, wherein the holding device (54) holds the light sources of the first and the second plurality of light sources in such a way on the elliptical paraboloidal surface that their centre lines extend substantially normal to the elliptical paraboloidal surface.

6. Overhead reading lamp according to claim 1 or 5, wherein the holding device (54) holds in each case a plurality of light sources on more than two parallel parables (100 - 132) of the elliptical paraboloidal surface, wherein the distances between two in each case adjacent parables decrease outward from a parable (100) running through the vertex of the elliptical paraboloidal surface.

7. Overhead reading lamp according to one of the preceding claims, wherein the activation device (62) is adapted to selectively activate one of the light sources (10 - 30; 66 - 98) in dependence upon a position of the passenger seat (136).

8. Overhead reading lamp according to one of the preceding claims, comprising
- a third plurality of light sources (150, 154), each of which emits light along a centre line, wherein
the holding device (54) immovably secures the third plurality of light sources (150, 154) disposed in a third row (114, 120) in such a way that the centre lines of the light sources of the third plurality of light sources lie in a third plane and are inclined relative to one another, wherein the light sources of the first plurality of light sources (66 - 98) emit light of a greater luminous intensity than the light sources of the third plurality of light sources (150, 154) and the activation device (62) is adapted to activate at least one of the light sources of the third plurality of light sources (150, 154) independently of the selective activation of a light source of the first plurality of light sources (66 - 98).

9. Overhead reading lamp according to one of the preceding claims, comprising
- a cover at the light-emitting side of the lamp, the outer surface of which cover at least partially emulates the shape of the first row (56; 100), wherein the cover comprises a plurality of cutouts, in which the light sources of the first plurality of light sources (10 - 30; 66 - 98) are held by the holding device (54), and the light sources of the first plurality of light sources (10 - 30; 66 - 98) comprise light exit surfaces that are at least substantially flush with the outer surface of the cover.

10. Overhead reading lamp according to one of claims 1 to 8, comprising
- an at least partially transparent cover (60) at the light-emitting side of the lamp, the outer surface of which cover at least partially emulates the shape of the first row (56; 100), wherein the light sources of the first plurality of light sources (10 - 30; 66 - 98) emit light through the cover (60).

11. Passenger service unit (140), in particular for an aircraft cabin, comprising at least one overhead reading lamp according to one of the preceding claims.

## Revendications

1. Plafonnier de lecture pour un siège de passager (136), notamment dans une cabine d'avion, comportant :
- une première pluralité de sources lumineuses (10-30 ; 66-98), dont chacune émet de la lumière le long d'un axe médian (32-52),
- un dispositif de support (54) qui maintient de façon immobile la première pluralité de sources lumineuses (10-30 ; 66-98) agencées en une première rangée (56 ; 100) de façon telle, que les axes médians (32-52) des sources lumineuses de la première pluralité de sources lumineuses se situent dans un premier plan et soient inclinés les uns par rapport aux autres, et
- un dispositif de commande d'alimentation (62) qui est relié à la première pluralité de sources lumineuses (10-30 ; 66-98) et est conçu pour commander sélectivement l'alimentation de respectivement une des sources lumineuses de la première pluralité de sources lumineuses (10-30 ; 66-98),
**caractérisé par**
- une deuxième pluralité de sources lumineuses, dont chacune émet de la lumière le long d'un axe médian,
le dispositif de support (54) maintenant de façon immobile la deuxième pluralité de sources lumineuses agencées en une deuxième rangée (102-132) de façon telle, que les axes médians des sources lumineuses de la deuxième pluralité de sources lumineuses se situent dans un deuxième plan et soient inclinés les uns par rapport aux autres, que la deuxième rangée (102-132) soit parallèle à la première rangée (100), que les sources lumineuses de la première et de la deuxième pluralité de sources lumineuses se situent sur une surface de paraboloïde elliptique, et que le premier et le deuxième plans se coupent.

2. Plafonnier de lecture selon la revendication 1, dans lequel les axes médians de deux sources lumineuses respectivement voisines de la première pluralité de sources lumineuses (10-30) présentent une distance d'espacement (a) identique au niveau des sources lumineuses (10-30), et dans lequel tous les axes médians (32-52) de la première pluralité de sources lumineuses se coupent en un point (58).

3. Plafonnier de lecture selon la revendication 1, dans lequel, au niveau des sources lumineuses, la distance d'espacement entre les axes médians de deux sources lumineuses respectivement voisines de la première pluralité de sources lumineuses (66-98) diminue vers l'extérieur à partir d'une source lumineuse (82) agencée au centre de la première rangée (100), et dans lequel tous les axes médians de la première pluralité de sources lumineuses se coupent en un point.

4. Plafonnier de lecture selon l'une des revendications précédentes, dans lequel la première rangée présente une configuration d'un premier arc de parabole (100) dont le côté concave est dirigé vers la direction d'émission de la source lumineuse.

5. Plafonnier de lecture selon la revendication 1, dans lequel le dispositif de support (54) maintient les sources lumineuses de la première et de la deuxième pluralité de sources lumineuses sur la surface de paraboloïde elliptique de manière telle que leurs axes médians s'étendent sensiblement de manière normale à la surface de paraboloïde elliptique.

6. Plafonnier de lecture selon la revendication 1 ou la revendication 5, dans lequel le dispositif de support (54) maintient respectivement une pluralité de sources lumineuses sur plus de deux paraboles parallèles (100-132) de la surface de paraboloïde elliptique, les distances d'espacement entre deux paraboles respectivement voisines diminuant vers l'extérieur à partir d'une parabole (100) passant par le sommet de la surface de paraboloïde elliptique.

7. Plafonnier de lecture selon l'une des revendications précédentes, dans lequel le dispositif de commande d'alimentation (62) est conçu pour commander sélectivement l'alimentation de l'une des sources lumineuses (10-30 ; 66-98) en fonction de la position du siège de passager (136).

8. Plafonnier de lecture selon l'une des revendications précédentes, comportant
- une troisième pluralité de sources lumineuses (150, 154), dont chacune émet de la lumière le long d'un axe médian,
le dispositif de support (54) maintenant de façon immobile la troisième pluralité de sources lumineuses (150, 154) agencées en une troisième rangée (114, 120) de façon telle, que les axes médians des sources lumineuses de la troisième pluralité de sources lumineuses se situent dans un troisième plan et soient inclinés les uns par rapport aux autres, les sources lumineuses de la première pluralité de sources lumineuses (66-98) rayonnant avec une intensité lumineuse plus élevée que les sources lumineuses de la troisième pluralité de sources lumineuses (150, 154) et le dispositif de commande d'alimentation (62) étant conçu pour commander l'alimentation d'au moins l'une des sources lumineuses de la troisième pluralité de sources lumineuses (150, 154) indépendamment de la commande sélective d'alimentation d'une source lumineuse de la première pluralité de sources lumineuses (66-98).

9. Plafonnier de lecture selon l'une des revendications précédentes, comportant
- un capot sur le côté d'émission du plafonnier, dont la surface extérieure reproduit au moins partiellement la forme de la première rangée (56 ; 100), le capot présentant une pluralité d'évidements dans lesquels les sources lumineuses de la première pluralité de sources lumineuses (10-30 ; 66-98) sont maintenues par le dispositif de support (54), et les sources lumineuses de la première pluralité de sources lumineuses (10-30 ; 66-98) présentant des faces de sortie de lumière au moins sensiblement à fleur de la surface extérieure du capot.

10. Plafonnier de lecture selon l'une des revendications 1 à 8, comportant
- un capot (60) au moins partiellement transparent sur le côté d'émission du plafonnier, dont la surface extérieure reproduit au moins partiellement la forme de la première rangée (56 ; 100), les sources lumineuses de la première pluralité de sources lumineuses (10-30 ; 66-98) rayonnant à travers le capot (60).

11. Unité de service (140) pour passager, notamment destinée à une cabine d'avion, comprenant au moins un plafonnier de lecture selon l'une des revendications précédentes.
